# FASCICULE DE BREVET EUROPEEN

(11) **EP 1 612 374 B1**
(45) Date de publication et mention de la délivrance du brevet: **20.12.2006**
(21) Numéro de dépôt: 05291375.3
(22) Date de dépôt: 27.06.2005
(51) Int. Cl.: F01D 5/18, F01D 9/02

(54) **Aube fixe de turbine à refroidissement amélioré**
Turbinenstatorschaufel mit verbesserter Kühlung
Turbine guide vane with improved cooling properties

(30) Priorité: 30.06.2004 FR 0407256
(43) Date de publication de la demande: 04.01.2006
(73) Titulaire: SNECMA, 75015 Paris (FR)
(72) Inventeur: Guimbard, Jean-Michel, 77930 Cely en Bière (FR); Pabion, Philippe, 77000 Vaux le Pénil (FR); Schwartz, Eric, 77240 Seine Port (FR)
(74) Mandataire: David, Alain

(56) Documents cités:
- FR-A- 2 094 033
- US-A- 4 946 346

## Description

### Domaine de l'invention

La présente invention se rapporte au domaine général des aubages de turbine de turbomachine, et plus particulièrement aux aubes fixes de turbine munies de circuits de refroidissement intégrés.

### Art antérieur

De façon connue en soi, une turbomachine comporte une chambre de combustion dans laquelle de l'air et du carburant sont mélangés avant d'y être brûlés. Les gaz issus de cette combustion s'écoulent vers l'aval de la chambre de combustion et alimentent ensuite une turbine haute pression et une turbine basse pression. Chaque turbine comporte une ou plusieurs rangées d'aubes fixes (appelées distributeurs) alternant avec une ou plusieurs rangées d'aubes mobiles (appelées roues mobiles), espacées de façon circonférentielle tout autour du rotor de la turbine. Ces aubes de turbine sont soumises aux températures très élevées des gaz de combustion qui atteignent des valeurs largement supérieures à celles que peuvent supporter sans dommages les aubes qui sont en contact direct avec ces gaz, ce qui a pour conséquence de limiter leur durée de vie.

Afin de résoudre ce problème, il est connu de munir ces aubes de circuits de refroidissement internes visant à réduire la température de ces dernières en créant, à l'intérieur de l'aube, une circulation organisée de cet air et, dans la paroi de l'aube, des perforations destinées à générer un film protecteur pour cette aube. Un exemple d'une telle aube refroidie est illustré dans le brevet US 4,946,346.

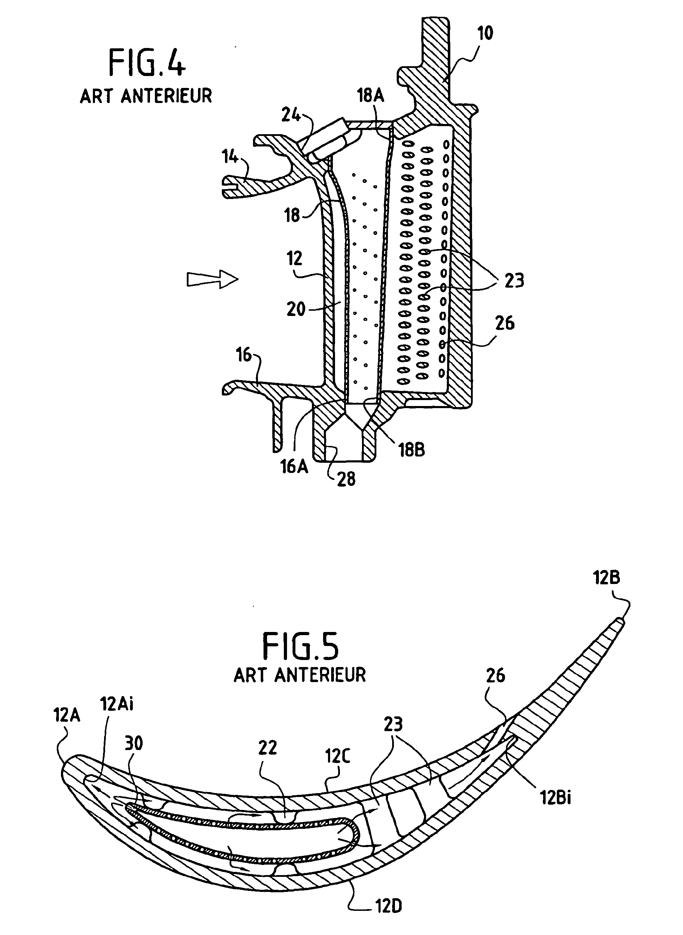

Les figures 4 et 5 illustrent une structure d'aube fixe refroidie conventionnelle du type à chemise débouchante équipant actuellement les distributeurs de certains moteurs aéronautiques.

L'aube 10 qui comporte une pale creuse 12, insérée entre une plate-forme externe 14 et une plate-forme interne 16, comporte une chemise interne 18 qui définit une cavité périphérique annulaire 20 entre la paroi interne de la pale et l'extérieur de la chemise. A sa partie supérieure 18A, cette chemise est fixée de façon étanche sur la plate-forme externe de l'aube par soudure ou brasure et sa partie inférieure 18B vient s'encastrer dans la plate-forme interne de l'aube au niveau d'une zone de guidage ou glissière 16A, en laissant un jeu déterminé nécessaire au montage et au coulissement de la chemise sous les effets de la dilatation thermique. Des plots 22 solidaires de la paroi interne ou formés par des bossages de la chemise maintiennent un écartement constant entre la chemise et cette paroi interne et des pontets 23 assurent une rigidification de l'aube dans la partie restante de la cavité 20.

Cette chemise débouchante 18 est du type multiperforée de sorte que le débit d'air de refroidissement délivré par une source d'air sous pression, en général le compresseur de la turbomachine, pénètre dans la plate-forme externe 14 par un orifice d'entrée 24, arrive à l'intérieur de la chemise 18 et s'échappe en partie par la multiperforation de la chemise en formant dans la cavité périphérique 20 des jets d'air qui refroidissent par impact la paroi interne de la pale 12 et viennent aussi impacter les pontets 23, puis sont évacués par des perçages calibrés 26 réalisés sur le bord de fuite ou sur la face intrados de cette pale afin de former un film d'air protecteur le long de ce bord de fuite. Le débit d'air de refroidissement restant sort par la plate-forme interne 16 qu'il traverse en la refroidissant pour s'échapper par un orifice de sortie 28 à l'extérieur de l'aube vers d'autres organes du moteur tels que des disques qui nécessitent aussi un refroidissement.

Cette structure conventionnelle donne globalement satisfaction. Toutefois, le fait de calibrer l'air par les trous de chemise et indirectement par la section de fuite engendre un refroidissement pale moins efficace. En outre, il apparaît des variations importantes de gradient thermique locaux sur la paroi de l'aube, notamment au voisinage du bord d'attaque, qui sont à l'origine de contraintes radiales qui en cas d'utilisations extrêmes se révèlent préjudiciables au fonctionnement de cette aube.

### Objet et résumé de l'invention

La présente invention vise donc à pallier les inconvénients liés à ces variations importantes de gradient thermique en proposant une aube fixe de turbomachine refroidie par chemise débouchante qui réduit notablement les contraintes radiales s'exerçant sur l'aube. Elle se rapporte aussi à toute turbine de turbomachine équipée de telles aubes fixes refroidies par chemise débouchante.

A cet effet, il est prévu une aube fixe de turbomachine ayant un bord d'attaque, un bord de fuite et des faces intrados et extrados et comprenant une chemise débouchante perforée définissant une cavité annulaire entre une paroi extérieure de cette chemise et une paroi interne de l'aube, une ouverture d'admission d'air pour alimenter l'intérieur de cette chemise en air de refroidissement et une ouverture d'évacuation d'air pour évacuer une partie de cet air de refroidissement à l'extérieur de l'aube, la chemise étant solidaire de l'aube à une extrémité et à une autre extrémité libre de coulisser le long d'un bord interne de l'aube sous les effets de la dilation thermique relative entre la chemise et la paroi interne de l'aube, caractérisée en ce que ladite chemise débouchante comporte une pluralité de trous répartis sur seulement deux zones déterminées de cette chemise, une première série de trous étant disposée en regard de la paroi interne du bord d'attaque et une seconde série de trous étant disposée en regard de la paroi interne du bord de fuite, les trous de chemise de ladite seconde série de trous étant en outre disposés pour éviter tout impact avec des pontets de l'aube.

De la sorte, en favorisant le refroidissement au niveau des bords d'attaque et de fuite de l'aube et en limitant les impacts avec les pontets, on diminue fortement les gradients thermiques locaux et le niveau des contraintes axiales sur la pale.

Avantageusement, lesdites première et seconde séries de trous comportent chacune au plus trois rangées de trous de chemise, typiquement une rangée unique de trous de chemise.

De préférence, ladite seconde série de trous est disposée de sorte à définir une ligne de plus court chemin entre la chemise et ladite paroi interne du bord de fuite. Selon la configuration envisagée, ladite seconde série de trous peut être disposée de sorte à définir une ligne de plus court chemin entre la chemise et des trous d'émission calibrés réalisés sur ladite face intrados afin de former un film d'air protecteur le long dudit bord de fuite.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif et sur lesquels :
- la figure 1 est une vue en coupe longitudinale d'une aube fixe de distributeur de turbine selon l'invention,
- la figure 1A est une loupe d'une partie de la figure 1,
- la figure 2 est une vue en coupe transversale de l'aube de la figure 1,
- la figure 3 est une courbe représentant l'évolution de la température sur la partie externe de l'aube de la figure 2, et
- les figures 4 et 5 illustrent selon deux coupes perpendiculaires une aube fixe de distributeur de turbine de l'art antérieur.

### Description détaillée d'un mode de réalisation

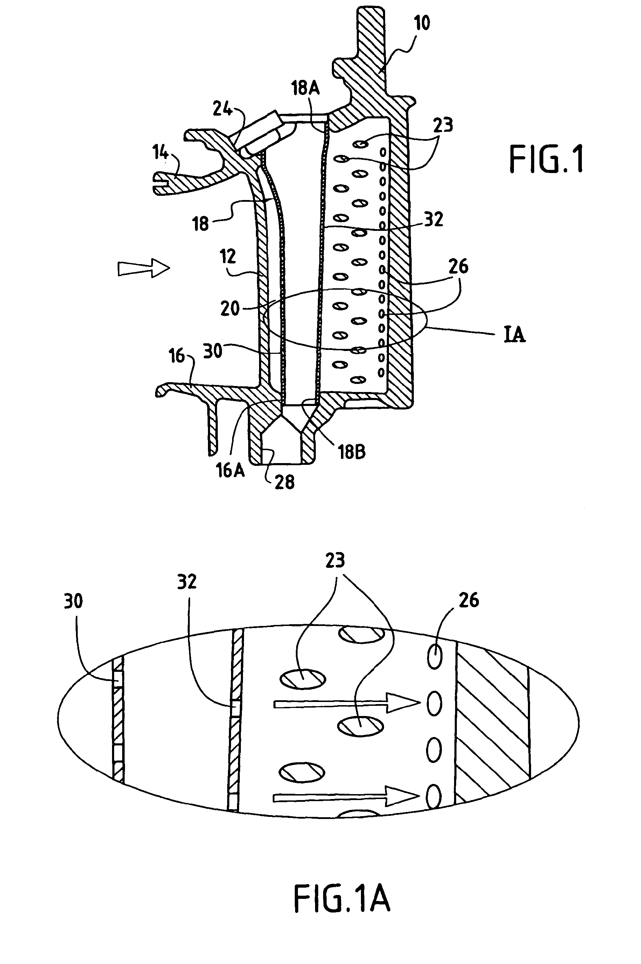

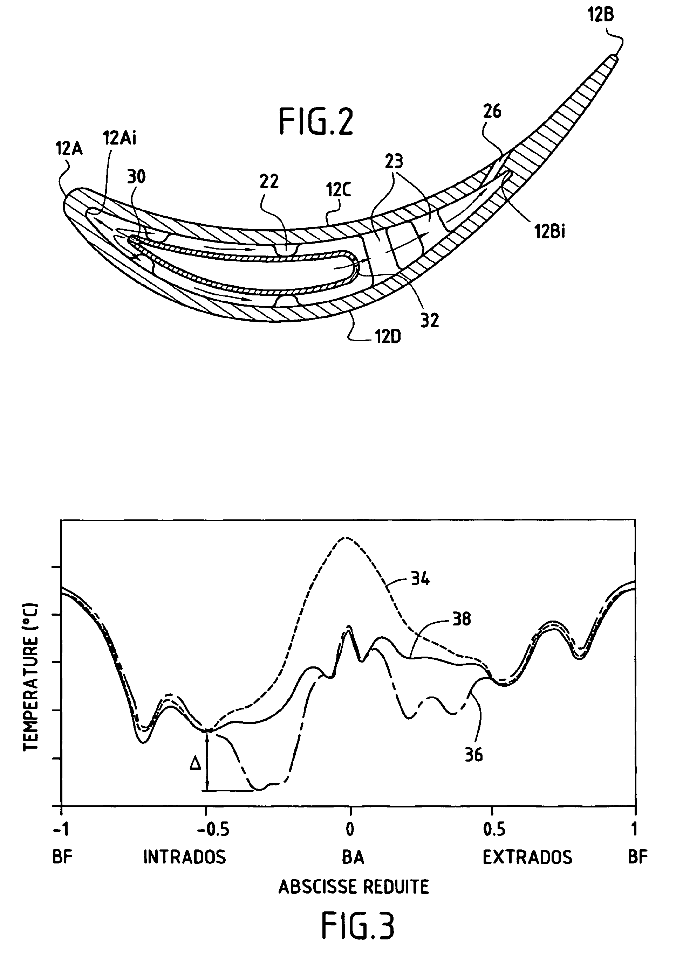

Les figures 1 et 2 représentent un aubage refroidi 10, par exemple une aube fixe de distributeur de turbine d'une turbomachine conforme à la présente invention. Cette aube formée d'une pale creuse 12 montée entre une plate-forme externe 14 et une plate-forme interne 16 est fixée sur un carter (non représenté) de la turbine par l'intermédiaire de la plate-forme externe définissant une paroi externe pour la veine d'écoulement des gaz de combustion au travers de la turbine, la paroi interne de la veine d'écoulement étant défini par la plate-forme interne de cette aube.

Classiquement, en fonction du sens d'écoulement des gaz de combustion illustré par une flèche sur la figure 1, on définit pour cette pale un bord d'attaque 12A, un bord de fuite 12B et des faces intrados 12C et extrados 12D.

Une telle aube fixe est soumise aux températures très élevées des gaz de combustion et nécessite donc d'être refroidie. A cet effet, et de façon connue en soi, l'aube 10 comporte au moins une chemise débouchante perforée 18, alimentée en air de refroidissement à l'une de ses extrémités radiales, et qui définit une cavité périphérique annulaire 20 entre la paroi interne de l'aube et la paroi extérieure de la chemise. A sa partie supérieure 18A, cette chemise est fixée de façon étanche sur la plate-forme externe 14 de l'aube par soudure ou brasure et, à sa partie inférieure 18B, elle vient s'encastrer dans la plate-forme interne 16 de l'aube au niveau d'une zone de guidage ou de coulissement 16A, en laissant un espace annulaire créant un jeu déterminé, nécessaire au montage et au coulissement de la chemise en fonctionnement, compte tenu de l'évolution différente des températures des divers composants de l'aube et donc de leur dilatation relative, mais aussi une zone de fuite pour l'air de refroidissement qui par ailleurs, après avoir traversé la chemise, est évacué par les trous d'émission calibrés 26 réalisés sur la face intrados de cette pale afin de former un film d'air protecteur le long du bord de fuite 12B. Des ouvertures d'admission d'air 24 et d'évacuation d'air 28 sont prévues au niveau des plates-formes externe et interne respectivement pour la circulation de l'air de refroidissement.

Selon l'invention, il est proposé de concentrer les trous de la chemise sur deux zones particulières dont la sensibilité aux gaz chauds de combustion circulant dans la veine d'écoulement de ces gaz est prépondérante, à savoir les zones de la chemise en regard respectivement du bord d'attaque et du bord de fuite de la pale.

Comme le montre la figure 2, le bord d'attaque 12A est refroidi par des jets d'air sortant d'une première série de trous 30 de la chemise, disposés en regard de la paroi interne 12Ai de ce bord d'attaque, et qui refroidissent ainsi par impact cette zone interne de la pale. Cette première série de trous comporte avantageusement une unique rangée de trous.

Le bord de fuite 12B est refroidi quant à lui par l'intermédiaire des trous d'émission calibrés 26 alimentés par des jets d'air sortant d'une seconde série de trous 32 de la chemise disposés sensiblement en regard de la paroi interne 12Bi du bord de fuite et qui refroidissent ainsi par impact cette zone de la paroi interne de la pale. Cette seconde série de trous comporte aussi avantageusement une unique rangée de trous. Plus précisément et comme le montre le détail de la figure 1A, ces trous sont disposés de façon à former le plus court chemin entre la chemise 18 et les trous d'émission calibrés 26 et à éviter tout impact avec la paroi interne de l'aube et les pontets d'aube 23. Ainsi, l'air qui va traverser les trous d'émission calibrés est relativement froid, puisque seulement la partie provenant des jets d'air sortant de la première série de trous 30 s'est échauffée au contact de la paroi interne chaude au niveau du bord d'attaque et des faces intrados et extrados, l'autre partie provenant des jets d'air sortant directement de la seconde série de trous 32 qui n'ont pas subi d'échauffement du fait de leur absence d'impact avec la paroi interne et les pontets, avant leur accès aux trous d'émission calibrés.

Les apports de l'invention au niveau des variations de températures sont illustrés sur la figure 3 qui représente un développé d'une coupe radiale effectuée en milieu de veine, c'est-à-dire là où la température des gaz de combustion est le plus élevée, d'une aube fixe de distributeur basse pression telle qu'illustrée aux figures 1 et 2.

La première courbe 34 correspond à une configuration théorique dans laquelle le nombre de trous de chemise serait très faible et par conséquent dans laquelle le débit de refroidissement passerait quasiment totalement par la fuite existant entre la chemise et la plateforme interne (soit une section équivalente des trous de chemise « section de la fuite). On peut alors noter que dans cette configuration extrême, seule la paroi au niveau du bord de fuite est refroidie de façon correcte, la paroi au niveau du bord d'attaque n'étant pratiquement pas refroidie. Il en résulte que la température à cet endroit est très proche de la température des gaz de combustion et donc dépasse la limite admissible par le matériau.

La deuxième courbe 36 correspond à une configuration de l'art antérieur dans laquelle les trous de chemise sont répartis sur toute la surface de la chemise. Dans cette configuration, le bord d'attaque est correctement refroidi avec une température en deçà de la limite de rupture de la pale, mais on observe encore des écarts très importants en terme de gradients thermique préjudiciables à la tenue de l'aube du fait des contraintes locales engendrées, et donc à sa durée de vie.

Au contraire, avec la présente invention (troisième courbe 38 en traits pleins), ces écarts sont notablement réduits avec de surcroît un gain en température de quelques degrés au bord d'attaque et au bord de fuite, typiquement de l'ordre de 4 à 8 degrés. En outre, de part et d'autre du bord d'attaque, sur une distance égale au plus à la moitié de la distance existant entre le bord d'attaque et le bord de fuite (soit pour une abscisse réduite < 0,5), il peut être procuré un gain très important sur le gradient thermique de l'aube. Plus précisément, on relève un gain Δ allant jusqu'à 60 degrés sur le gradient thermique de la face intrados pour une abscisse réduite de l'ordre de 0,2 à 0,4.

Ainsi, avec cette configuration de trous de chemise, les parties trop refroidies de l'art antérieur sont plus réchauffées et les parties insuffisamment refroidies le sont d'avantage. On aboutit ainsi à un meilleur équilibre dans les gradients thermiques. Bien entendu, si la description a été faite essentiellement en regard d'une aube fixe de turbine de turbomachine, il est évident qu'une telle structure d'aube fixe refroidie par chemise débouchante peut s'appliquer sans difficulté à un stator de compresseur de turbomachine comme à un bras de carter de turbomachine.

## Revendications

1. Aube fixe de turbomachine ayant un bord d'attaque (12A), un bord de fuite (12B) et des faces intrados (12C) et extrados (12D) et comprenant une chemise débouchante perforée (18) définissant une cavité annulaire (20) entre une paroi extérieure de cette chemise et une paroi interne de l'aube (10), des pontets (23) assurant une rigidification de l'aube dans la partie restante de la cavité (20), une ouverture d'admission d'air (24) pour alimenter l'intérieur de cette chemise en air de refroidissement et une ouverture d'évacuation d'air (28) pour évacuer une partie de cet air de refroidissement à l'extérieur de l'aube, la chemise étant solidaire de l'aube à une extrémité (18A), **caractérisé en ce que** la chemise est à une autre extrémité (18B) libre de coulisser le long d'un bord interne (16A) de l'aube sous les effets de la dilatation thermique relative entre la chemise et la paroi interne de l'aube, ladite chemise comportant une pluralité de trous répartis sur seulement deux zones déterminées de cette chemise, une première série de trous (30) étant disposée en regard de la paroi interne du bord d'attaque (12Ai) et une seconde série de trous (32) étant disposée en regard de la paroi interne du bord de fuite (12Bi), les trous de chemise de ladite seconde série de trous (32) étant en outre disposés pour éviter tout impact avec lesdits pontets de l'aube (23).

2. Aube selon la revendication 1, **caractérisée en ce que** lesdites première et seconde séries de trous comportent chacune au plus trois rangées de trous de chemise (30A, 30B, 30C), typiquement une rangée unique de trous de chemise.

3. Aube selon la revendication 2, **caractérisée en ce que** ladite seconde série de trous est disposée de sorte à définir une ligne de plus court chemin entre la chemise et ladite paroi interne du bord de fuite.

4. Aube selon la revendication 2, **caractérisée en ce que** ladite seconde série de trous est disposée de sorte à définir une ligne de plus court chemin entre la chemise et des trous d'émission calibrés (26) réalisés sur ladite face intrados afin de former un film d'air protecteur le long dudit bord de fuite.

5. Turbine de turbomachine, **caractérisée en ce qu'**elle comporte une pluralité d'aubes fixes refroidies par chemise débouchante selon l'une quelconque des revendications 1 à 4.

## Claims

1. A turbomachine stator vane having a leading edge (12A), a trailing edge (12B), and pressure side and suction side faces (12C, 12D), and including a perforated open liner (18) defining an annular cavity (20) between an outside wall of the liner and an inside wall of the vane (10), bridges 23 for stiffening the vane in the remaining portion of the cavity 20, an air admission opening (24) for feeding cooling air to the inside of the liner, and an air exhaust opening (28) for exhausting a fraction of this cooling air out from the vane, the liner being secured to the vane at one end (18A), the vane being **characterised in that** the liner is free at another end (18B) to slide along an inside edge (16A) of the vane under the effects of relative thermal expansion between the liner and the inside wall of the vane, said liner including a plurality of holes distributed over only two determined zones of said liner, a first series of holes (30) being disposed facing the inside wall of the leading edge (12Ai) and a second series of holes (32) being disposed facing the inside wall of the trailing edge (12Bi), the holes through the liner in the second series of holes (32) also being disposed in such a manner as to avoid any impact against the bridges (23) of the vane.

2. A vane according to claim 1, **characterised in that** each of said first and second series of holes comprises no more than three rows of holes (30A, 30B, 30C) through the liner, and typically a single row of holes through the liner.

3. A vane according to claim 2, **characterised in that** said second series of holes is disposed in such a manner as to define a shortest-path line between liner and said inside wall of the trailing edge.

4. A vane according to claim 2, **characterised in that** said second of holes is disposed in such a manner as to define a shortest-path line between the liner and calibrated emission holes (26) formed through said pressure side face in order to form a protective film of air along said trailing edge.

5. A turbomachine turbine, **characterised in that** it includes a plurality of stator vanes cooled by respective open liners according to any one of claims 1 to 4.

## Patentansprüche

1. Leitschaufel einer Turbomaschine mit einer Anströmkante (12A) und einer Abrißkante (12B) und Innenseiten (12C) und Außenseiten (12D) und umfassend eine gelochte, perforierte Außenhaut (18), die einen ringförmigen Hohlraum zwischen einer Außenwand dieser Außenhaut und einer Innenwand der Schaufel (10) definiert, Brücken (23), die eine Versteifung der Schaufel in dem verbleibenden Teil des Hohlraums (20) sichern, eine Lufteinlaßöffnung (24), um das Innere dieser Außenhaut mit Kühlluft zu versorgen, und eine Luftabzugsöffnung (28), um einen Teil dieser Kühlluft aus der Schaufel herauszuziehen, wobei die Außenhaut fest mit der Schaufel an einem Ende (18A) verbunden ist, **dadurch gekennzeichnet, daß** die Außenhaut an einem anderen Ende (18B) frei entlang eines Innenrandes (16A) der Schaufel unter den Wirkungen der Wärmedehnung relativ zwischen der Außenhaut und der Innenwand der Schaufel gleiten kann, wobei die Außenhaut eine Mehrzahl von Öffnungen umfaßt, die nur über zwei bestimmte Zonen dieser Außenhaut verteilt sind, wobei eine erste Reihe von Öffnungen (30) gegenüber der Innenwand der Anströmkante (12Ai) angeordnet ist und eine zweite Reihe von Öffnungen (32) gegenüber der Innenwand der Abrißkante (12Bi) angeordnet ist, wobei die Löcher der Außenhaut der zweiten Reihe von Öffnungen (32) außerdem angeordnet sind, um jegliche Wirkung mit den Brücken der Schaufel (23) zu vermeiden.

2. Schaufel nach Anspruch 1, **dadurch gekennzeichnet, daß** die ersten und zweiten Reihen von Öffnungen jede höchstens drei Reihen von Öffnungen einer Außenhaut (30A, 30B, 30C), typischerweise eine einzige Reihe von Öffnungen einer Außenhaut umfassen.

3. Schaufel nach Anspruch 2, **dadurch gekennzeichnet, daß** die zweite Reihe von Öffnungen derart ist, daß eine Linie kürzeren Weges zwischen der Außenhaut und der Innenwand der Abrißkante definiert ist.

4. Schaufel nach Anspruch 2, **dadurch gekennzeichnet, daß** die zweite Reihe von Öffnungen derart ist, daß eine Linie kürzeren Weges zwischen der Außenhaut und kalibrierten Auslaßöffnungen (26) definiert ist, die auf der Innenseite ausgeführt sind, um einen schützenden Luftfilm entlang der Abrißkante auszubilden.

5. Turbine einer Turbomaschine, **dadurch gekennzeichnet, daß** sie eine Vielzahl von durch eine gelochte Außenhaut gekühlten Leitschaufeln gemäß einem der Ansprüche 1 bis 4 umfaßt.
